# EUROPEAN PATENT SPECIFICATION

(11) **EP 2 422 551 B1**
(45) Date of publication and mention of the grant of the patent: **03.07.2013**
(21) Application number: 09785935.9
(22) Date of filing: 21.04.2009
(51) Int. Cl.: H04W 48/08, H04W 8/26, H04W 48/16, H04W 88/06

(54) **Wireless station connectivity information distribution**
Drahtlose Stationskonnektivitäts-Informationsverteilung
Distribution d'informations de connectivité de station sans fil

(43) Date of publication of application: 29.02.2012
(73) Proprietor: Nokia Corporation, 02150 Espoo (FI)
(72) Inventor: KNECKT, Jarkko, FI-02330 Espoo (FI); MARIN, Janne, FI-02210 Espoo (FI); KASSLIN, Mika, FI-02770 Espoo (FI)
(74) Representative: Aromaa, Sami Rainer
(86) International application number: PCT/IB2009/005804
(87) International publication number: WO 2010/122369

(56) References cited:
- EP-A- 1 538 788
- EP-A- 1 708 437
- US-A1- 2007 214 254
- US-A1- 2008 062 945

## Description

### TECHNICAL FIELD

This description relates to wireless networks.

### BACKGROUND

In wireless networks, devices may communicate with each other via a central station, or directly with each other on a peer-to-peer basis. Multiple communications or networking protocols may be available for the devices to connect and communicate with each other.

A method to discover existing devices is given in the patent publication EP1708437.

### SUMMARY

The invention is defined by the independent claims 1, 8, 14 and 15. According to an example embodiment, a method may include receiving, by a broker station in a wireless network, a broker activation request message from a plurality of client stations, the broker activation request messages indicating whether the client stations supports a plurality of wireless networking protocols. The method may also include compiling wireless networking capabilities for the client stations based on the received broker activation request messages. The method may also include sending a networking capability message to at least one of the client stations, the network capability message indicating identifiers of client stations from the plurality of client stations which are capable of communicating with the at least one client station via at least one of the wireless network protocols indicated by the broker activation request message, the capability response message being based on the compiled wireless networking capabilities and the received capability request message.

According to another example embodiment, a broker station may be configured to receive a broker activation request message from a plurality of client stations, the broker activation request messages indicating whether the client stations supports a plurality of wireless networking protocols. The broker station may also be configured to compile wireless networking capabilities for the client stations based on the received broker activation request messages. The broker station may also be configured to send a networking capability message to at least one of the client stations, the network capability message indicating identifiers of client stations from the plurality of client stations which are capable of communicating with the at least one client station via at least one of the wireless network protocols indicated by the broker activation request message, the capability response message being based on the compiled wireless networking capabilities and the received capability request message.

According to another example embodiment, a broker station may include means for receiving, in a wireless network, a broker activation request message from a plurality of client stations, the broker activation request messages indicating whether the client stations supports a plurality of wireless networking protocols. The broker station may also include means for compiling wireless networking capabilities for the client stations based on the received broker activation request messages. The broker station may also means for sending a networking capability message to at least one of the client stations, the network capability message indicating identifiers of client stations from the plurality of client stations which are capable of communicating with the at least one client station via at least one of the wireless network protocols indicated by the broker activation request message, the capability response message being based on the compiled wireless networking capabilities and the received capability request message.

According to another example embodiment, computer program product for facilitating device-to-device communication between mobile stations may be tangibly embodied on a computer storage medium and include executable code that, when executed, is configured to cause a broker station which serves a plurality of client stations to receive a broker activation request message from a plurality of client stations, the broker activation request messages indicating whether the client stations supports a plurality of wireless networking protocols. The computer program product may also cause the broker station to compile wireless networking capabilities for the client stations based on the received broker activation request messages. The computer program product may also cause the broker station to send a networking capability message to at least one of the client stations, the network capability message indicating identifiers of client stations from the plurality of client stations which are capable of communicating with the at least one client station via at least one of the wireless network protocols indicated by the broker activation request message, the capability response message being based on the compiled wireless networking capabilities and the received capability request message.

According to another example embodiment, a method may include sending, by a requesting client station in a wireless network, a broker activation request message to a broker station, the broker activation request message indicating whether the requesting client station supports each of the plurality of wireless networking protocols. The method may also include receiving a networking capability message from the broker station, the networking capability message indicating identifiers of other client stations in the wireless network which are capable of communicating with the requesting client station via at least one of the wireless network protocols indicated by the networking capability message. The method may also include initiating peer-to-peer communication with at least one of the other client stations identified by the networking capability message.

According to another example embodiment, a wireless station may be configured to send, in a wireless network, a broker activation request message to a broker station, the broker activation request message indicating whether the requesting client station supports each of the plurality of wireless networking protocols. The wireless station may also be configured to receive a networking capability message from the broker station, the networking capability message indicating identifiers of other client stations in the wireless network which are capable of communicating with the requesting client station via at least one of the wireless network protocols indicated by the networking capability message. The wireless station may also be configured to initiate peer-to-peer communication with at least one of the other client stations identified by the networking capability message.

According to another example embodiment, a wireless station may include means for sending, in a wireless network, a broker activation request message to a broker station, the broker activation request message indicating whether the requesting client station supports each of the plurality of wireless networking protocols. The client station may also include means for receiving a networking capability message from the broker station, the networking capability message indicating identifiers of other client stations in the wireless network which are capable of communicating with the requesting client station via at least one of the wireless network protocols indicated by the networking capability message. The client station may also include means for initiating peer-to-peer communication with at least one of the other client stations identified by the networking capability message.

According to another example embodiment, computer program product for facilitating device-to-device communication between mobile stations may be tangibly embodied on a computer storage medium and include executable code that, when executed, is configured to cause a wireless station to send, in a wireless network, a broker activation request message to a broker station, the broker activation request message indicating whether the requesting client station supports each of the plurality of wireless networking protocols. The computer program product may also cause the wireless station to receive a networking capability message from the broker station, the networking capability message indicating identifiers of other client stations in the wireless network which are capable of communicating with the requesting client station via at least one of the wireless network protocols indicated by the networking capability message. The computer program product may also cause the wireless station to initiate peer-to-peer communication with at least one of the other client stations identified by the networking capability message.

The details of one or more implementations are set forth in the accompanying drawings and the description below. Other features will be apparent from the description and drawings, and from the claims.

### BRIEF DESCRIPTION OF THE DRAWINGS

FIG 1 is a diagram showing a wireless network according to an example embodiment.

FIG 2A is a vertical time-sequence diagram showing messages exchanged between a broker station and client stations according to an example embodiment.

FIG 2B is a vertical time-sequence diagram showing messages exchanged between a broker station and client stations according to another example embodiment.

FIG. 3 is a timeline showing traffic indication messages sent by the broker station according to an example embodiment.

FIG. 4 is a block diagram showing a medium access control (MAC) frame according to an example embodiment.

FIG. 5 is a block diagram showing a networking service announcement according to an example embodiment.

FIG. 6 is a block diagram showing a networking services field according to an example embodiment.

FIG 7A is a block diagram showing a broker activation request according to an example embodiment.

FIG 7B is a block diagram showing a broker activation request according to another example embodiment.

FIG 8 is a block diagram showing a broker activation response according to an example embodiment.

FIG 9A is a block diagram showing a capability request according to an example embodiment.

FIG. 9B is a block diagram showing a capability request according to another example embodiment.

FIG. 10A is a block diagram showing a capability response according to an example embodiment.

FIG. 10B is a block diagram showing a capability response according to another example embodiment.

FIG 11 is a block diagram showing a capability activation request according to an example embodiment.

FIG. 12 is a block diagram showing a capability activation response according to an example embodiment.

FIG. 13 is a flowchart showing a method according to an example embodiment.

FIG. 14 is a flowchart showing a method according to another example embodiment.

FIG. 15 is a block diagram showing a wireless station according to an example embodiment.

### DETAILED DESCRIPTION

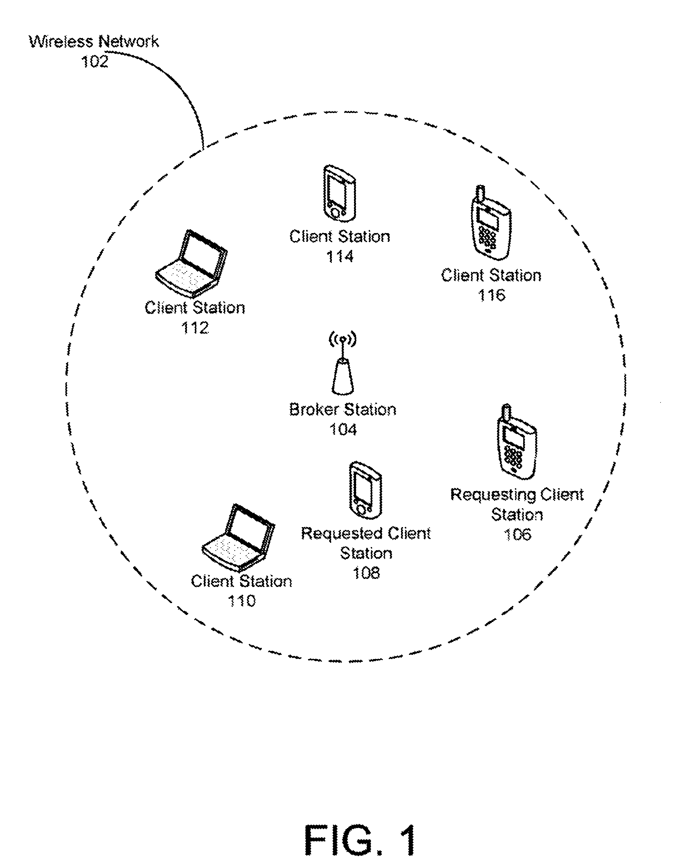

FIG. 1 is a diagram showing a wireless network 102 according to an example embodiment. The wireless network 102 may include, for example, an IEEE 802.11 Wireless Local Area Network (WLAN), and 802.16 Worldwide Interoperability for Microwave Access (WiMAX) network, a Wireless Gigabit Alliance (WGA) network, National Telecommunications Management Structure (NTMS) network, a Bluetooth network, a Third Generation Partnership Project (3GPP) Long Term Evolution (LTE) network, or a cellular telephone network, according to example embodiments.

The wireless network 102 may include a plurality of wireless stations 104, 106, 108, 110, 112, 114, 116. The wireless stations 104, 106, 108, 110, 112, 114, 116 may be capable of wireless or unguided communication with any number of other wireless stations 104, 106, 108, 110, 112, 114, 116 in the wireless network 102 via any number of wireless or unguided networking or communication protocol, such as, but not limited to, those referred to in paragraph [0031] above. The wireless stations 104, 106, 108, 110, 112, 114, 116 may include, for example, WLAN Access Points (APs), WiMAX base stations, cellular telephone network base stations, or Node Bs, WLAN mobile stations, WiMAX subscriber stations, WGA devices, NTMS devices, laptop or notebook computers, PDAs, smartphones, or cellular telephones, according to example embodiments.

One or more of the wireless stations 104, 106, 108, 110, 112, 114, 116 may be considered a "broker station" 104. The broker station 104 may or may not be connected to the Internet and provide Internet services to the other wireless stations 106, 108, 110, 112, 114, 116. The broker station 104 may, for example, send beacon frames, such as traffic indication message (TIM) and/or delivery traffic indication message (DTIM) beacons, to the other wireless stations 106, 108, 110, 112, 114, 116.

The broker station(s) 104 may be a wireless or unguided station which receives messages from the other wireless stations 106, 108, 110, 112, 114, 116, which may be considered "client stations," indicating which wireless networking or communication protocols the respective client stations 106, 108, 110, 112, 114, 116 are capable of supporting or communicating in. The broker station 104 may compile the information regarding the other wireless networking or communication capabilities of the client stations 106, 108, 110, 112, 114, 116 and provide the compiled information to the client stations 106, 108, 110, 112, 114, 116. The compiling and distribution of the wireless networking or communication protocols by the broker station 104 may facilitate peer-to-peer communication between the client stations 106, 108, 110, 112, 114, 116.

As used herein, a "client station" may refer to a wireless device or station which communicates its wireless communication or networking capabilities to the broker station 104 via an air interface, and receives the wireless communication or networking capabilities of other client stations 106, 108, 110, 112, 114, 116 from the broker station 104 via the air interface. The client stations 106, 108, 110, 112, 114, 116 may or may not receive services, such as Internet services, from the broker station 104, at any given time.

The broker station 104 may communicate the wireless networking or communication capabilities of any number of the client stations 106, 108, 110, 112, 114, 116 to any number of the client stations 106, 108, 110, 112, 114, 116. The broker station 104 may communicate the wireless networking or communication capabilities by sending network capability messages to any number of the client stations 106, 108, 110, 112, 114, 116. The broker station 104 may communicate the wireless networking or communication capabilities with a network capability message by, for example, broadcasting or multicasting a networking service announcement message to any or all of the client stations 106, 108, 110, 112, 114, 116 via the air interface. The client stations 106, 108, 110, 112, 114, 116 may provide their wireless networking or communication capabilities to the broker station by sending broker activation request messages to the broker station 104 via the air interface. The client stations 106, 108, 110, 112, 114, 116 may, for example, send the broker activation request messages to the broker station 104 upon entry into the wireless network 102. The broker station 104 may acknowledge receipt of the broker activation request messages by sending broker activation response messages to the respective client stations 106, 108, 110, 112, 114, 116 via the air interface.

The client stations 106, 108, 110, 112, 114, 116 may receive more detailed information about the wireless networking or communication capabilities of one or more other client stations 106, 108, 110, 112, 114, 116 by sending a capability request message 208 to the broker station 104 via the air interface, to which the broker station 104 may respond by sending a network capability message, such as a capability response message to the respective client station 106, 108, 110, 112, 114, 116. The capability response message may include more detailed information about the requested client station 106, 108, 110, 112, 114, 116 than the networking service announcement message. Or, the capability request message and capability response message may be exchanged directly between the requesting client station and the requested client station.

A requesting client station 106 may request to communicate with a requested client station 108 by sending a capability activation request message to the requested client station 108 via the air interface. The capability activation request message may be sent to the requested client station 108 directly via the air interface, or may be routed through the broker station 104, and may indicate wireless communication or networking protocols via which the requesting client station 106 requests to the communicate with the requested client station 108 on a peer-to-peer basis.

The requesting client station 106 may also request to activate a networking protocol with client stations, devices, or terminals other than the requested client station 108. The requests and responses between the requesting client station 106 and the requested client station 108 may also allow the requesting client station 106 and requested client station 108 to select the optimal networking or communications protocol for their communication. For example, the requesting client station 106 and/or the requested client station 108 may select an optimal wireless networking or communication protocol based on throughput, power consumption, and/or forwarding capabilities.

The requested client station 108 may respond to the capability activation request by sending a capability activation response to the requesting client station 106 either directly via the air interface, or may route the capability activation request to the requesting client station 106 through the broker station 104. The capability activation response message may indicate or select one or more of the wireless communication or networking protocols indicated by the capability activation response message. The requesting client station 106 and requested client station 108 may thereafter communicate via the selected wireless networking or communication protocol. The requesting client station 106 may select the wireless networking or communication protocol for communication with the requested client station 108, in the capability activation request, subject to confirmation or acknowledgment by the requested client station 108 in the capability activation response, or the requesting client station 106 may offer, via the capability activation request, to communicate with the requested client station 108 in any of a plurality of wireless networking or communications protocols, and the requested client station 108 may select one of the offered wireless networking or communication protocols and indicate the selection in the capability activation response, according to example embodiments.

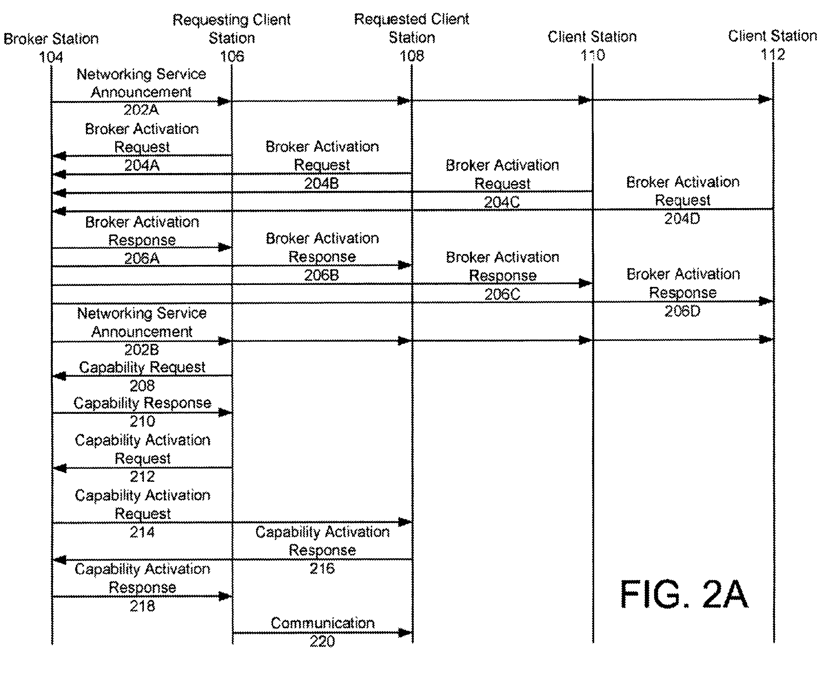

FIG 2A is a vertical time-sequence diagram showing messages exchanged between a broker station 104 and client stations 106, 108, 110, 112 according to an example embodiment. While four client stations 106, 108, 110, 112 are shown in FIG. 2A, any number of client stations 106, 108, 110, 112, 114, 116 may included in the exchange of messages, according to example embodiments.

In this example, the broker station 104 may send, multicast, or broadcast a network capability message, such as a networking service announcement message 202A to the client stations 106, 108, 110, 112. In an example embodiment, the networking service announcement message 202A may be included in a Medium Access Control (MAC) frame, such as an 802.11 MAC frame.

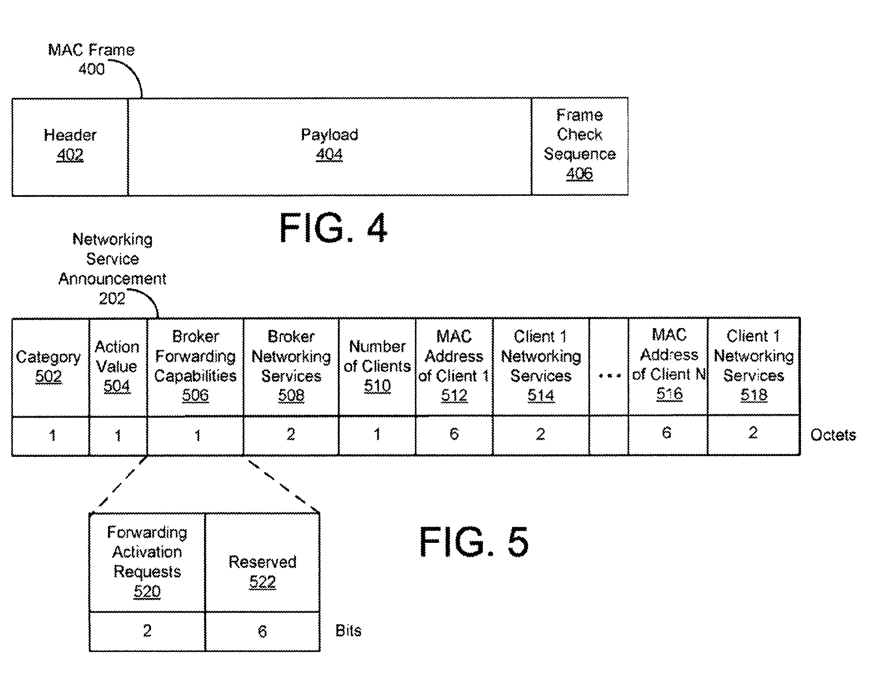

FIG. 4 is a block diagram showing a medium access control (MAC) frame 400 according to an example embodiment. Any or all of the messages described herein may be included in a MAC frame 400 such as the MAC frame 400 shown in FIG. 4; however, the disclosure is not limited to including the messages in MAC frames 400, and messages may be included in any format.

In the example shown in FIG. 4, the MAC frame 400 may include a header 402. The header 402 may include, for example, a frame control field indicating a type of frame (control, management, or data) and providing control information; a duration/connection ID field indicating a time a channel will be allocated for the MAC frame 402; address fields, such as transmitter address, receiver address, service set ID (SSID), source address, and destination address; and a sequence control field used for fragmentation, reassembly, and numbering frames. The MAC frame 400 may also include a payload field 404. The MAC frame 400 may also include a payload 404, which may include the messages described herein, and/or may include any or all of the fields shown in FIGs. 5-12. The MAC frame 400 may also include a frame check sequence 406, which may include, for example, a cyclic redundancy check (CRC).

Returning to FIG. 2A, the networking service announcement message 202A sent by the broker station 104 to the client stations 106, 108, 110, 112 may have been based on compiled wireless networking or communications capabilities of the client stations 106, 108, 110, 112. The broker station 104 may compile the wireless networking or communications capabilities based, for example, on broker activation requests 204, described below, which may be received from the client stations 106, 108, 110, 112. The networking service announcement message 202A may indicate wireless networking protocols supported by the client stations 106, 108, 110, 112. Networking service announcement messages 202 may be repeatedly sent with updated information based on the broker activation requests 204.

While FIG. 2A is described with reference to one broker station 104, any number of the client stations 106, 108, 110 may have either one or multiple broker stations with which the client station(s) may exchange messages described herein. If a status of a client station 106, 108, 110, 112 changes, such as by activating a new wireless networking or communication interface, the respective client station 106, 108, 110, 112 may provide this information to the broker station 104. The client stations 106, 108, 110 112 may provide this information to the broker station 104 by sending periodic broker activation request messages 204 to the broker station 104, or by sending broker activation request messages 204 to the broker station 104 upon changes in the status of the respective client station 106, 108, 110, 112, according to example embodiments.

FIG. 5 is a block diagram showing a networking service announcement 202 according to an example embodiment. As discussed above, the networking service announcement 202 may be included the example MAC frame 400 shown in FIG. 4, or in any other frame or packet format. The networking service announcement 202 may include a category field 502, which may specify a category for the networking service announcement 202. The networking service announcement 202 may also include an action value field 504, which may specify an action frame type for the networking service announcement 202. The values included in the category field 502 and the action value field 504 may, in conjunction, specify the frame or packet as a networking service announcement 202, according to an example embodiment.

The networking service announcement 202 may also include a broker forwarding capabilities field 506. The broker forwarding capabilities field 506 may, for example, indicate the broker station's 104 ability to forward capability activation request messages 214, described below. The broker forwarding capabilities field 506 may, for example, include a two-bit forwarding activation requests subfield 520, and a subfield which may be used for other purposes. As shown in the following table, the forwarding activation requests subfield 520 may indicate whether the broker station 104 may not forward any capability activation request messages 214, may forward capability activation request messages only for clients (in this context, "clients" meaning wireless stations 106, 108, 110, 112, 114, 116 which are presently receiving wireless data service, such as Internet service, from the broker station), or may forward capability activation request messages 214 for clients and non clients.

| Bit 0 | Bit 1 | Explanation |
|---|---|---|
| 0 | 0 | No forwarding of the Activation Requests |
| 0 | 1 | Forwarding of the activation requests for clients only |
| 1 | 0 | Forwarding of the activation requests for clients and non-clients |
| 1 | 1 | Reserved |

The networking services announcement 202 may include a broker networking services field 508. The broker networking services field 508 may indicate networking service information of the broker station 104, such as wireless networking or communications protocols supported and/or presently in use by the broker station. The broker networking services field 508 may, for example, include a networking services field.

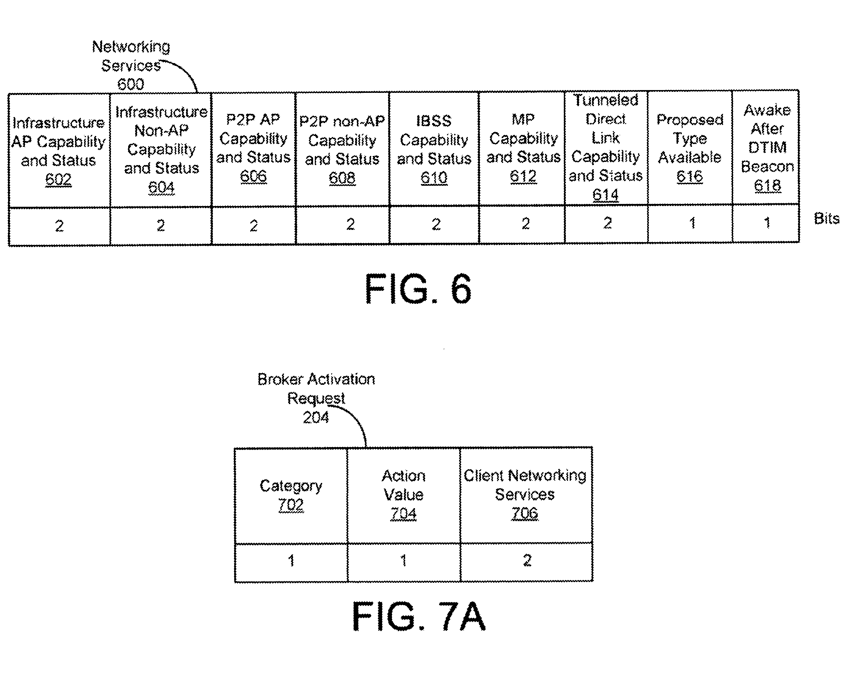

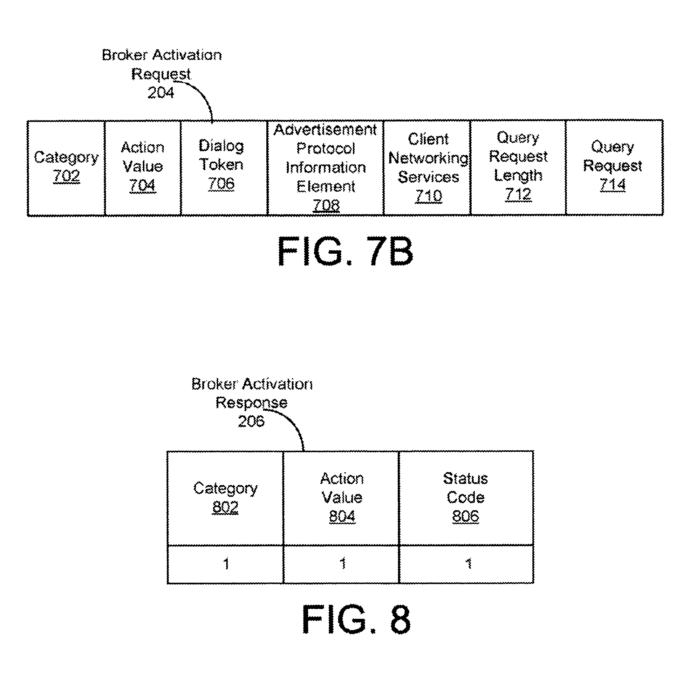

FIG. 6 is a block diagram showing a networking services field 600 according to an example embodiment. The networking services field may be included in the broker networking services field 508 and indicate wireless networking or communications protocols supported by the broker station, may be included in a client networking services field 514, 518 and indicate wireless networking or communications protocols supported by respective client stations 106, 108, 110, 112, 114, 116 announced by the broker station, and/or may be included in a client networking services field described with reference to FIG. 7 and indicate wireless networking or communications protocols supported by sending client station 106, 108, 110, 112, 114, 116.

In the example shown in FIG. 6, the networking services field 600 may include an infrastructure AP capability and status subfield 602. The infrastructure AP capability and status subfield 602 may, for example, indicate whether the wireless station 104, 106, 108, 110, 112, 114, 116 is capable of operating as an access point in an infrastructure network, and/or whether the wireless station 104, 106, 108, 110, 112, 114, 116 is currently operating as an access point in an infrastructure network. The infrastructure AP capability and status subfield 602 may include the example capability and status element shown below.

| Value: | Description: |
|---|---|
| 00 | Capability Not Supported |
| 01 | Capability Supported |
| 10 | Capability in Use |
| 11 | Request to Use |

The networking services field 600 may also include an infrastructure non-AP capability and status subfield 604, which may indicate whether the wireless station 104, 106, 108, 110, 112, 114, 116 is capable of operating as a non-access point station in an infrastructure network, and/or whether the wireless station 104, 106, 108, 110, 112, 114, 116 is currently operating as a non-access point station in an infrastructure network. The non-AP capability and status subfield 604 may include the example capability and status element shown above.

The networking services field 600 may also include a peer-to-peer (P2P) AP capability and status subfield 606. The P2P AP capability and status subfield 606 may indicate whether the wireless station 104, 106, 108, 110, 112, 114, 116 is capable of acting as an access point in a peer-to-peer network, and/or whether the wireless station 104, 106, 108, 110, 112, 114, 116 is currently operating as an access point in a peer-to-peer network. The P2P capability and status subfield 606 may include the example capability and status element shown above.

The networking services field 600 may also include a P2P non-AP capability and status subfield 608, which may indicate whether the wireless station 104, 106, 108, 110, 112, 114, 116 is capable of acting as a non-access point station in a peer-to-peer network, and/or whether the wireless station 104, 106, 108, 110, 112, 114, 116 is currently operating as a non-access point station in a peer-to-peer network. The P2P non-AP capability and status subfield 608 may include the example capability and status element shown above.

The networking services field 600 may also include an IBSS capability and status subfield 610. The IBSS capability and status subfield 610 may indicate whether the wireless station 104, 106, 108, 110, 112, 114, 116 is capable of operating in an Independent Basic Service Set (IBSS), and/or whether the wireless station 104, 106, 108, 110, 112, 114, 116 is currently operating in an IBSS. The IBSS capability and status subfield may include the example capability and status element shown above.

The networking services field 600 may also include an MP capability and status subfield 612, which may indicate whether the wireless station 104, 106, 108, 110, 112, 114, 116 is capable of operating as a mesh point (MP), and/or whether the wireless station 104, 106, 108, 110, 112, 114, 116 is presently operating as an MP. The MP capability and status subfield 612 may include the example capability and status element shown above.

The networking services field 600 may also include a tunneled direct link capability and status subfield 614. The tunneled direct link capability and status subfield 614 may indicate whether the wireless station 104, 106, 108, 110, 112, 114, 116 is capable of operating in a tunneled direct link setup, and whether the wireless station 104, 106, 108, 110, 112, 114, 116 is currently operating in a tunneled direct link setup. The tunneled direct link capability and status subfield 614 may include the example capability and status element shown above.

The networking services field 600 may also include a proposed type available subfield 616. In an example embodiment, the proposed type available subfield 616 may be set to zero except when included in a capability activation response message 216, 218. In a capability activation response message 216, 218, the proposed type available subfield may be set to one if the wireless station 104, 106, 108, 110, 112, 114, 116 is capable of operating in at least one of the wireless networking or communication protocols indicated in the capability activation request message 212, 214 to which the capability activation response message 216, 218 is responding, and zero otherwise.

The networking services field 600 may also include an awake after DTIM beacon subfield 618. The awake after DTIM beacon subfield 618 may indicate whether the respective wireless station 104, 106, 108, 110, 112, 114, 116 will or will not operate in an awake state for a predetermined time, such as 5 milliseconds, after a DTIM beacon sent by the broker station 104 or an AP.

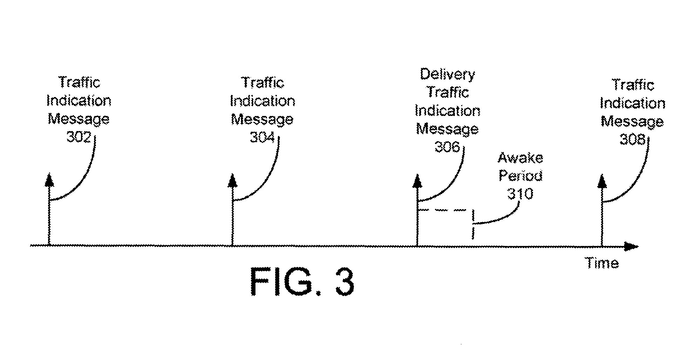

FIG. 3 is a timeline showing traffic indication messages (TIMs) 302, 304, 306, 308 sent by the broker station 104 according to an example embodiment. In this example, the broker station 104 may periodically send TIMs, and may also periodically send delivery traffic interval messages (DTIMs) 306, such as every fourth TIM 302, 304, 306, 308. The wireless stations 104, 106, 108, 110, 112, 114, 116 may or may not operate in an awake state during an awake period 310 after the DTIM 306, as indicated by the awake after DTIM beacon subfield 618, according to an example embodiment. The awake period 310 may have a predetermined time slot, such as 5 milliseconds, after the DTIM 306.

Returning to FIG. 5, the networking service announcement 202 may include a number of clients field 510. The number of clients field 510 may indicate a number of client stations 106, 108, 110, 112, 114, 116 for which the networking service announcement is announcing wireless networking or communications capabilities. For each of the clients 1 through N (or zero through N-1), the networking service announcement 202 may include an address field 512, 516 and a client networking services field 514, 518. The address field 512, 516 may indicate an address, such as a MAC address, of the respective client station 106, 108, 110, 112, 114, 116. The client networking services field 514, 518 may indicate, for each respective client station 106, 108, 110, 112, 114, 116, the wireless networking or communication protocols supported by the respective client station, and may include a networking services field 600, such as the networking services field 600 shown and described with respect to FIG. 6.

Returning to FIG. 2A, the wireless stations 106, 108, 110, 112 may send broker activation request messages 204 to the broker station 104. The wireless stations 106, 108, 110, 112 may send their respective broker activation requests 204 in any order, and may send their respective activation requests 204 upon entry into the wireless network 102, upon request from the broker station 104, or periodically, according to example embodiments. The broker activation request messages 204 may serve to request that the broker station 104 will announce the client station's 106, 108, 110, 112 wireless networking or communication capabilities, such as in a networking service announcement message 202. The broker activation request messages 204 may indicate whether the sending client station 106, 108, 110, 112 supports each of a plurality of wireless networking or communications protocols, such as those described with reference to the networking services field 600 shown in FIG. 6. The broker activation request messages 204 may also indicate whether the respective client station 106, 108, 110, 112 operates in the awake state for the predefined period of time after the beacon message or DTIM 306, such as during the awake period 310.

FIG. 7A is a block diagram showing a broker activation request 204 according to an example embodiment. In this example, the broker activation request 204 may include a category field 702, which may specify a category for the broker activation request 204. The broker activation request 204 may also include an action value field 704, which may specify an action frame type for the broker activation request 204. The values included in the category field 702 and the action value field 704 may, in conjunction, specify the frame or packet as a broker activation request 204, according to an example embodiment. The broker activation request 204 may also include a client networking services field 706, which may include the subfields included in the networking services field 600 shown and described with reference to FIG. 6.

FIG. 7B is a block diagram showing a broker activation request 204 according to an example embodiment. In this example, the broker activation request 204 may include a Generic Advertisement (GAS) Initial Request Action frame. The broker activation request 204 or GAS Initial Request Action frame may include a category field 702, which may specify a category, such as Public Action frame, for the broker activation request 204 for GAS Initial Request Action frame. The broker activation request 204 or GAS Initial Request Action frame may also include an action value field 704, which may specify an action frame type for the broker activation request 204 or GAS Initial Request Action frame. The values included in the category field 702 and the action value field 704 may, in conjunction, specify the frame or packet as a broker activation request 204 or GAS Initial Request Action frame, according to an example embodiment. The broker activation request 204 or GAS Initial Request Action frame may also include a dialog token 706, may include a number which is used for matching the broker activation request 204 or GAS Initial Request Action frame with a response to the broker activation request 204 or GAS Initial Request Action frame.

The broker activation request 204 or GAS Initial Request Action frame may also include an advertisement protocol information element 708. The advertisement protocol information element 708 may identify a particular advertisement protocol and its corresponding advertisement control.

The broker activation request 204 or GAS Initial Request Action frame may also include a client networking services field 710, which may include the subfields included in the networking services field 600 shown and described with reference to FIG. 6.

The broker activation request 204 or GAS Initial Request Action frame may also include a query request length field 712, which may indicate a length of a query request field 714 included in the broker activation request 204 or GAS Initial Request Action frame. The query request field 714 may include a GAS query, according to an example embodiment.

Returning to FIG. 2A, the broker station 104 may respond to the broker activation request messages 204 by sending broker activation response messages 206 to the client stations 106, 108, 110, 112 which sent the respective broker activation request messages 204. The broker activation response messages 206 may acknowledge receipt of the respective broker activation request messages 204, and/or indicate whether broker activation is successful and the broker station 104 will announce the wireless networking or communication capabilities of the respective client station 106, 108, 110, 112.

FIG. 8 is a block diagram showing a broker activation response 206 according to an example embodiment. In this example, the broker activation response 206 may include a category field 802, which may specify a category for the broker activation response 206. The broker activation response 206 may also include an action value field 804, which may specify an action frame type for the broker activation response 206. The values included in the category field 802 and the action value field 804 may, in conjunction, specify the frame or packet as a broker activation response 206, according to an example embodiment. The broker activation response 206 may also include a status code 806, which may indicate whether broker activation was successful (the broker station 104 will announce the client station's 106, 108, 110, 112 wireless networking or communications capabilities) or unsuccessful (the broker station 104 will not announce the client station's 106, 108, 110, 112 wireless networking or communications capabilities).

Returning to FIG 2A, the broker station 104 may compile wireless networking or communication capabilities for the client stations 106, 108, 110, 112 based on the received broker activation request messages 204. The broker station 104 may send updated networking service announcement messages 202B which include the compiled wireless networking or communication capabilities. Thus, while FIG 2A shows the broker station 104 sending the networking service announcement message 202A before receiving the broker activation request messages 204, the broker station 104 may send networking service announcement messages 202B after receiving the broker activation request messages 204, so that the compiled wireless networking or communication capabilities may be included in the networking service announcement message 202B. The broker station 104 may send the updated networking service announcement messages 202 periodically, upon receipt of a predetermined number of new broker activation request messages 204, or after a timer has expired after receiving a new broker activation request message 204 which included information not included in the last networking service announcement message 202, according to example embodiments.

A client station 106, 108, 110, 112, such as a requesting client station 106, may be interested in learning more and/or in communicating with another client station 108, 110, 112, such as a requested client station, on a peer-to-peer basis. The requesting client station 106 may, for example, send a capability request message 208 to the broker station 106, requesting information such as which wireless networking or communication protocols are supported and/or active.

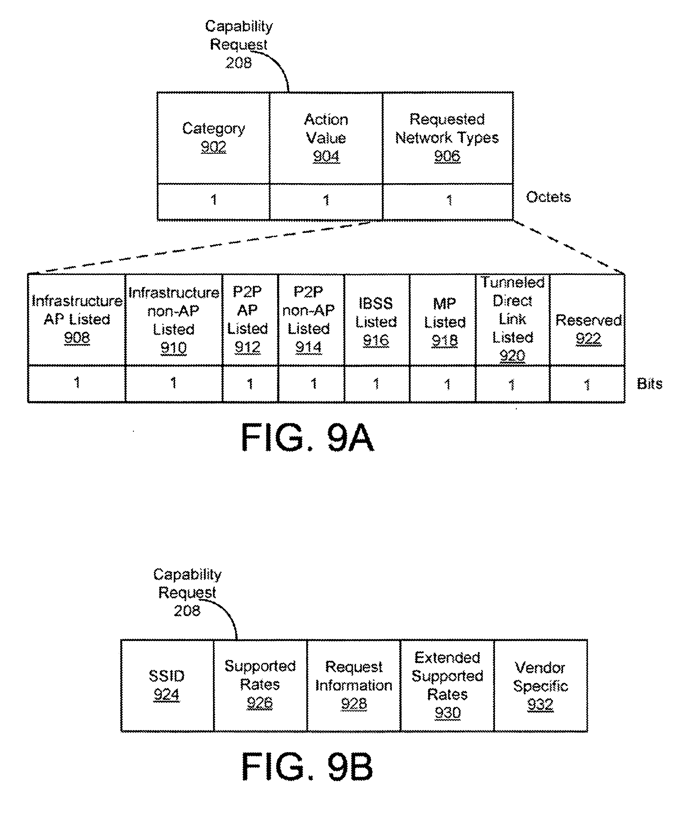

FIG. 9A is a block diagram showing a capability request 208 according to an example embodiment. In this example, the capability request 208 may include a category field 902, which may specify a category for the capability request 208. The capability request 208 may also include an action value field 904, which may specify an action frame type for the capability request 208. The values included in the category field 902 and the action value field 904 may, in conjunction, specify the frame or packet as a capability request 208, according to an example embodiment.

The capability request 208 may also include a requested network types field 906. The requested network types field 906 may indicate wireless networking or communication protocols via which the requesting client station 106 requests to communicate with the requested client station 108 or another client station 110, 112.

The requested network types field 906 may include an infrastructure AP listed subfield 908 which indicates whether the requesting client station 106 requests to communicate with the requested client station 108 or another client station 110, 112 acting as an infrastructure access point. The requested network types field 906 may also include an infrastructure non-AP station listed subfield 910 which indicates whether the requesting client station 106 requests to communicate with the requested client station 108 or another client station 110, 112 acting as an infrastructure non-access point station. The requested network types field 906 may also include a P2P AP listed subfield 912 which indicates whether the requesting client station 106 requests to communicate with the requested client station 108 or another client station 110, 112 acting as a peer-to-peer access point. The requested network types field 906 may also include a P2P non-AP station listed subfield 914 which indicates whether the requesting client station 106 requests to communicate with the requested client station 108 or another client station 110, 112 acting as a peer-to-peer non-access point station. The requested network types field 906 may also include an IBSS listed subfield 916 which indicates whether the requesting client station 106 requests to communicate with the requested client station 108 or another client station 110, 112 acting as an IBSS station. The requested network types field 906 may also include an MP listed subfield 918 which indicates whether the requesting client station 106 requests to communicate with the requested client station 108 or another client station 110, 112 acting as an MP station. The requested network types field 906 may also include a tunneled direct link listed subfield 920 which indicates whether the requesting client station 106 requests to communicate with the requested client station 108 or another client station 110, 112 in a tunneled direct link setup.

FIG. 9B is a block diagram showing a capability request 208 according to another example embodiment. According to this example, the capability request 208 may include a probe request. The capability request 208 or probe request may include, for example, an SSID field 924, a supported rates field 926, a request information field 928, an extended supported rates field 930, and a vendor specific field 932. The request information field 928 subfields including, for example, any or all of the subfields of the requested network types field 906 described above with reference to FIG. 9A.

Returning to FIG. 2A, the broker station 104 may respond to receiving the capability request message 208 by sending network capability message, such as a capability response message 210 to the requesting client station 106. The capability response message 208 may indentify client stations 108, 110, 112 which are capable of communicating with the requesting client station 106 on a peer-to-peer basis via at least one of the wireless networking or communication protocols indicated by the capability request message 206. The capability response message 210 may be based on the compiled wireless networking or communication capabilities.

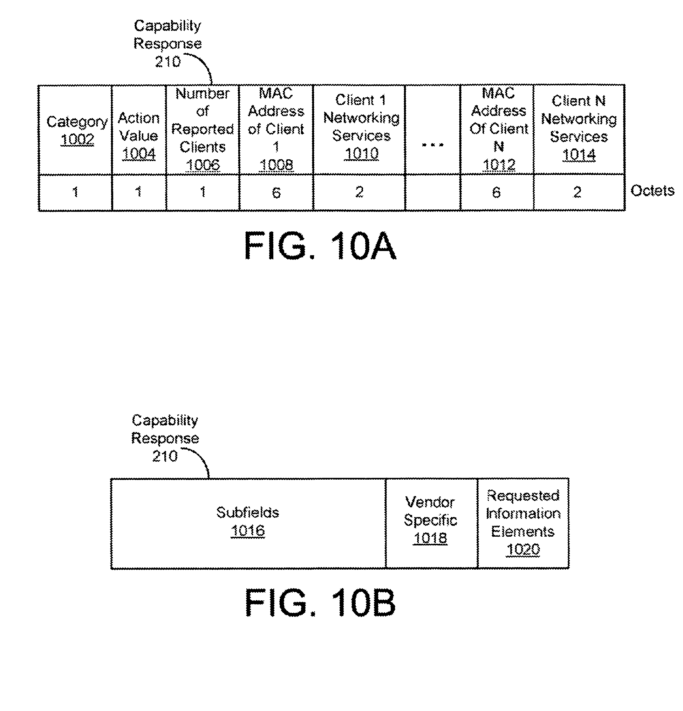

FIG. 10A is a block diagram showing network capability message, such as a capability response 210, according to an example embodiment. In this example, the capability response 210 may include a category field 1002, which may specify a category for the capability response 210. The capability response 210 may also include an action value field 1004, which may specify an action frame type for the capability response 210. The values included in the category field 1002 and the action value field 1004 may, in conjunction, specify the frame or packet as a capability response 210, according to an example embodiment.

The capability response 210 may include a number of reported clients field 1006, which may indicate the number N of client stations 108, 110, 112 which may communicate with the requesting client station 106 via at least one of the wireless networking or communications protocols indicated by the capability request message 208. For each of the N reported client stations 108, 110, 112, the capability response 210 may include an address field 1008, 1012, which may include an address of the respective client station 108, 110, 112, such as a MAC address. For each of the N reported client stations 108, 110, 112, the capability response 210 may also include a client networking services field 1010, 1014. The client networking services field 1010, 1014 may indicate the wireless networking or communication protocols supported by the respective reported client station 108, 110, 112, and may include a networking services field 600 with the subfields shown and described with reference to FIG. 6.

FIG. 10B is a block diagram showing network capability message, such as a capability response 210, according to another example embodiment. In this example, the capability response 210 may include a probe response. The capability response 210 or probe response may include subfields 1016, which may include, for example, a timestamp subfield, a beacon interval subfield, a capability subfield, an SSID subfield, a supported rates subfield, an FH parameter set subfield, a DS parameter set subfield, a CF parameter set subfield, an IBSS parameter set subfield, a country subfield, an FH parameters subfield, an FH pattern table subfield, a power constraint subfield, a channel switch announcement subfield, a quiet subfield, an IBSS DFS subfield, a TPC report subfield, an ERP information subfield, an extended supported rates subfield, an RSN subfield, a BSS load subfield, and/or an EDCA parameter set subfield. The capability response 210 or probe response may also include a vendor specific subfield 1018, which may include one or more vendor-specific information elements. The capability response 210 or probe response may also include a requested information elements field 1020, which may include elements requested by the capability request 208 and/or probe request, such as subfields included in the requested network types field 906, described above with reference to FIG. 9A, and/or a networking services field 600 with the subfields shown and described with reference to FIG. 6.

Returning to FIG. 2A, the requesting client station 106 may select or determine a client station 108, 110, 112 to request peer-to-peer communication with, or with which to request to select an optimal wireless networking or communication protocol or interface.. After selecting or determining the requested client station 108, the requesting client station 106 may determine whether to route a capability activation request message 212 through the broker station 104, or to send the capability activation request message 212 directly to the requested wireless station 108, based on the values included in the broker forwarding capabilities field 506 and/or the forwarding activation requests subfield 520, according to an example embodiment.

In the example shown in FIG. 2A, the requesting client station 106 may send the capability activation request message 212 through the broker station 104. The capability activation request message 212 may request activation of connectivity services with the requested client station 108. The capability activation request message 212 may identify the requested client station 108, and may indicate a plurality of wireless networking or communication protocols via which the requesting client station 106 requests to communicate with the requested client station 108.

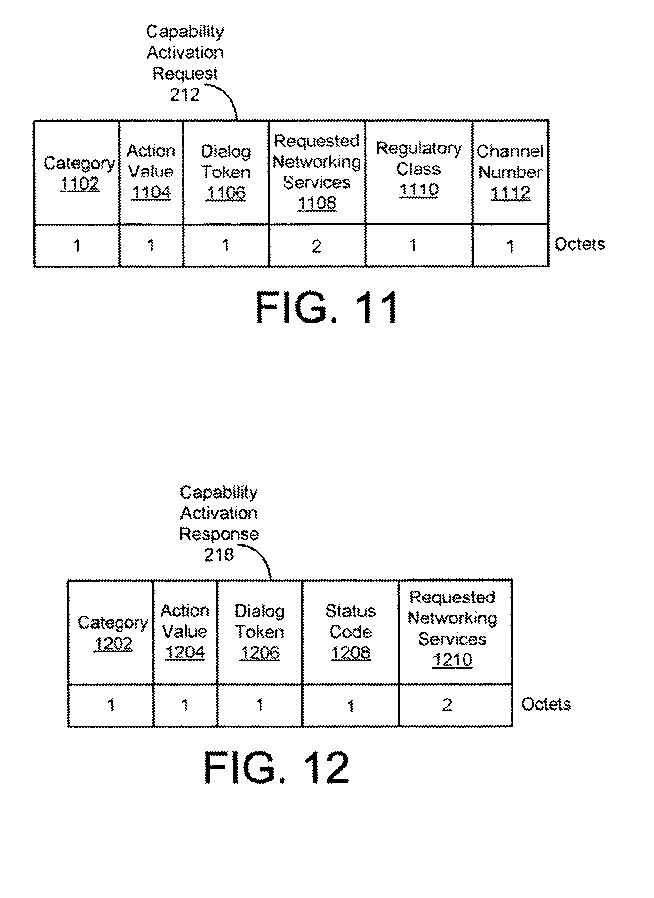

FIG. 11 is a block diagram showing a capability activation request 212 according to an example embodiment. In this example, the capability activation request 212 may include a category field 1102, which may specify a category for the capability activation request 212. The capability activation request 212 may also include an action value field 1104, which may specify an action frame type for the capability activation request 212. The values included in the category field 1102 and the action value field 1104 may, in conjunction, specify the frame or packet as a capability activation request 212, according to an example embodiment.

The capability activation request 212 may also include a dialog token field 1106. The dialog token field 1106 may include a number which is used for matching the capability activation request 212 with a capability activation response 216, 218.

The capability activation request 212 may also include a requested networking services field 1108. The requested networking services field 1108 may indicate the wireless networking or communication protocol via which the requesting client station 106 requests to communicate with the requested client station 108 on a peer-to-peer basis.

The capability activation request 212 may also include a regulatory class field 1110. The regulatory class field 1110 may specify a regulatory class in which a channel number is valid.

The capability activation request 212 may also include a channel number field 1112. The channel number field 1112 may indicate an operation channel in which the requested network service, indicated by the requested networking services field 1108, operates.

Returning to FIG. 2A, in this example, the broker station 104 may forward the capability activation request 212 to the requested client station 108. The requested client station 108 may determine whether the requested client station 108 may communicate with the requesting client station 106 based on the known capabilities of the requested client station 108 and the requested wireless networking or communication protocols indicated by the capability activation request message 214. Based on this determination, the requested client station 108 may send a capability activation response message 216, 218 to the requesting client station 106. In the example shown in FIG. 2A, the requested client station 108 may route the capability activation response message 216 to the broker station 104, and the broker station 104 may forward the capability activation response message 218 to the requesting client station 106. The capability activation response message 218 may indicate whether the requested client station 108 and the requesting client station 106 may communicate on a peer-to-peer basis.

FIG. 12 is a block diagram showing a capability activation response 218 according to an example embodiment. In this example, the capability activation response 218 may include a category field 1202, which may specify a capability activation response 218. The capability activation response 218 may also include an action value field 1204, which may specify an action frame type for the capability activation response 218. The values included in the category field 1202 and the action value field 1204 may, in conjunction, specify the frame or packet as a capability activation response 218, according to an example embodiment.

The capability activation response 218 may also include a dialog token field 1206. The dialog token field 1206 may include a value matching the value of the dialog token field 1106 included in the capability activation request 212, to show the correspondence of the capability activation response 218 to the capability activation request 212. The capability activation response 218 may also include a status code field 1208, which may indicate whether the requested client station 108 and the requesting client station 106 may communicate on the peer-to-peer basis. The capability activation response 218 may also include a requested networking services field 1210, which may indicate the wireless network or communication protocol via which the requested client station 108 and requesting client station 106 will communicate on the peer-to-peer basis. The requested networking services field 1210 may, for example, include a networking services field 600, as shown and described with reference to FIG. 6.

After receiving the capability activation response message 218, the requesting client station 106 may initiate communication 220 with the requested client station 108 via the selected wireless networking or communication protocol on the peer-to-peer basis.

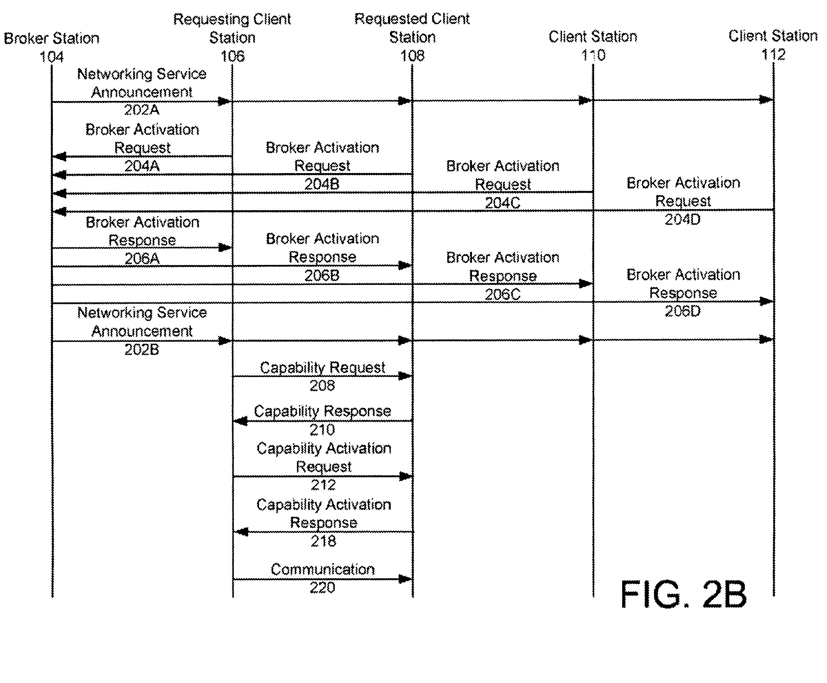

FIG 2B is a vertical time-sequence diagram showing messages exchanged between the broker station 104 and client stations 106, 108, 110, 112 according to another example embodiment. In this example, the requesting client station 106 may send the capability request message 208 directly to the requested client station 108, and may receive the capability response message 210 directly from the requested client station 108. Also in this example, the requesting client station 106 may send the capability activation request message 212 directly to the requested client station 108, and may receive the capability activation response message directly from the requested client station 108, rather than routing the capability activation request message 212 and capability activation response message 218 through the broker station 104.

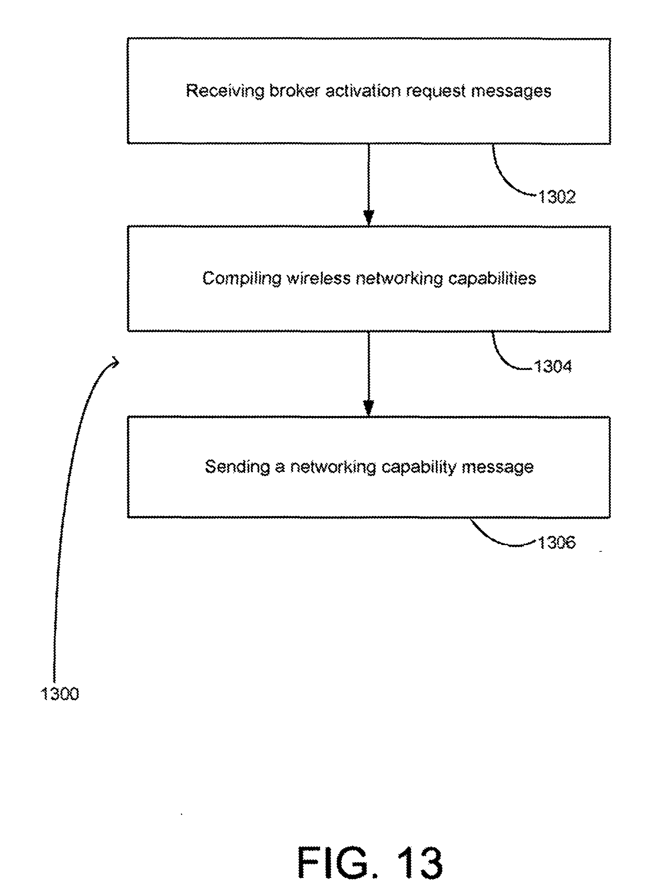

FIG. 13 is a flowchart showing a method 1300 according to an example embodiment. According to this example, the method 1300 may include receiving, by a broker station in a wireless network, a broker activation request message from a plurality of client stations, the broker activation request messages indicating whether the client stations supports a plurality of wireless networking protocols (1302). The method 1300 may also include compiling wireless networking capabilities for the client stations based on the received broker activation request messages (1304). The method 1300 may also include sending a networking capability message to at least one of the client stations, the network capability message indicating identifiers of client stations from the plurality of client stations which are capable of communicating with the at least one client station via at least one of the wireless network protocols indicated by the broker activation request message, the capability response message being based on the compiled wireless networking capabilities and the received capability request message (1306).

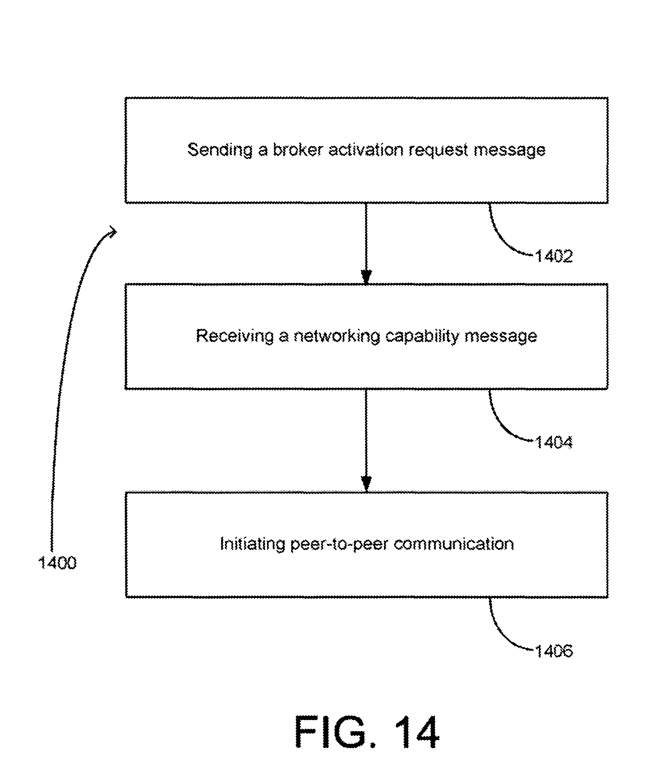

FIG. 14 is a flowchart showing a method 1400 according to another example embodiment. According to this example, the method 1400 may include sending, by a requesting client station in a wireless network, a broker activation request message to a broker station, the broker activation request message indicating whether the requesting client station supports each of the plurality of wireless networking protocols (1402). The method 1400 may also include receiving a networking capability message from the broker station, the networking capability message indicating identifiers of other client stations in the wireless network which are capable of communicating with the requesting client station via at least one of the wireless network protocols indicated by the networking capability message (1404). The method 1400 may also include initiating peer-to-peer communication with at least one of the other client stations identified by the networking capability message (1406).

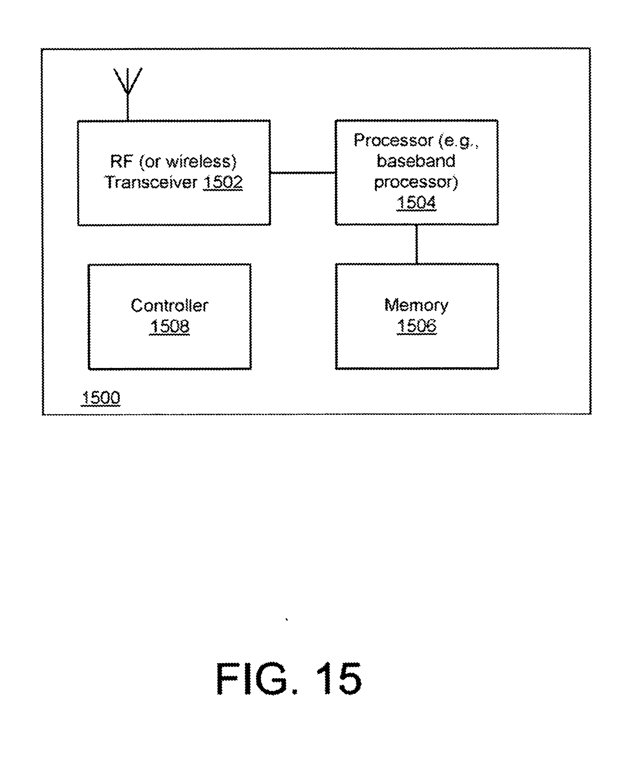

FIG. 15 is a block diagram of a wireless station (or wireless node) 1500 according to an example embodiment. The wireless station 1500 (e.g., broker station 104 or client station 106, 108, 110, 112, 114, 116) may include, for example, an RF (radio frequency) or wireless transceiver 1502, including a transmitter to transmit signals and a receiver to receive signals, a processor 1504 to execute instructions or software and control transmission and receptions of signals, and a memory 1506 to store data and/or instructions.

Processor 1504 may also make decisions or determinations, generate frames or messages for transmission, decode received frames or messages for further processing, and other tasks or functions described herein. Processor 1504, which may be a baseband processor, for example, may generate messages, packets, frames or other signals (such as those described above) for transmission via wireless transceiver 1502. Processor 1504 may control transmission of signals or messages over a wireless network, and may receive signals or messages, etc., via a wireless network (e.g., after being downconverted by wireless transceiver 1502, for example). Processor 1504 may be programmable and capable of executing software or other instructions stored in memory or on other computer media to perform the various tasks and functions described above, such as one or more of the tasks or methods described above. Processor 704 may be (or may include), for example, hardware, programmable logic, a programmable processor that executes software or firmware, and/or any combination of these. Using other terminology, processor 1504 and transceiver 1502 together may be considered as a wireless transmitter/receiver system, for example.

In addition, referring to FIG. 15, a controller (or processor) 1508 may execute software and instructions, and may provide overall control for the station 1500, and may provide control for other systems not shown in FIG. 15, such as controlling input/output devices (e.g., display, keypad), and/or may execute software for one or more applications that may be provided on wireless station 1500, such as, for example, an email program, audio/video applications, a word processor, a Voice over IP application, or other application or software.

In addition, a storage medium such as the memory 1506 may be provided that includes stored instructions, which when executed by a controller or processor may result in the processor 1504, or other controller or processor, performing one or more of the functions or tasks described above.
Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.
Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).
Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.
To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.
Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.
While certain features of the described implementations have been illustrated as described herein, many modifications, substitutions, changes and equivalents will now occur to those skilled in the art.

## Claims

1. A method comprising:
receiving, by a broker station in a wireless network, a broker activation request message from a first client station, the broker activation request message comprising wireless networking capabilities of the first client station;
sending a networking capability message to at least one other client station, the network capability message comprising identifier and wireless network capabilities of the first client station, the networking capability message being based at least partly on the broker activation request message.

2. The method of claim 1, wherein the wireless networking capabilities comprises information on which networking protocols the first client station is capable to support.

3. The method of claim 1, further comprising:
Receiving, by the broker station, a second broker activation request message from a second client station;
the networking capability message comprising identifier and wireless network capabilities of the first client station and the second client station, the networking capability message being based at least partly on the broker activation request message and the second broker activation request message.

4. The method of claim 1, wherein the wireless networking capabilities comprises at least one of operating as an access point in an infrastructure network, operating as a non-access point in an infrastructure network, operating as an access point in a peer-to-peer network, operating as a non-access point station in a peer-to-peer network, operating in an ad hoc wireless network, operating as a mesh point in a wireless network, and operating as a station in a tunneled direct link setup.

5. The method of claim 1, wherein sending the networking capability message comprises at least one of sending the networking capability message to a plurality of other client stations and broadcasting a networking service announcement message.

6. The method of claim 1, further comprising:
receiving a capability activation request message from a requesting client station, the capability activation request message comprising a requested client station with which the requesting client station requests to communicate on the peer-to-peer basis and at least one requested wireless networking protocol via which the requesting client station requests to communicate with the requested client station;
forwarding the capability activation request message to the requested client station;
receiving a capability activation response message from the requested client station; and
forwarding the capability activation response message to the requesting client station.

7. The method of claim 1, wherein the networking capability message is included in at least one of a beacon frame and a probe response frame.

8. A method comprising:
sending, by a first client station in a wireless network, a first broker activation request message to a broker station, the broker activation request message comprising wireless networking capabilities of the first client station;
receiving a networking capability message from the broker station, the networking capability message comprising identifier and wireless network capabilities of at least one other client station; and
initiating peer-to-peer communication with the at least one other client station.

9. The method of claim 8, wherein the wireless networking capabilities of the first client station comprises information on which networking protocols the first client station is capable to support, and wherein the wireless networking capabilities of the at least one other client station comprises information on which networking protocols the at least one other client station is capable to support.

10. The method of claim 8, wherein the wireless networking capabilities comprises at least one of operating as an access point in an infrastructure network, operating as a non-access point in an infrastructure network, operating as an access point in a peer-to-peer network, operating as a non-access point station in a peer-to-peer network, operating in an ad hoc wireless network, operating as a mesh point in a wireless network, and operating as a station in a tunneled direct link setup.

11. The method of claim 8, further comprising sending a capability activation request message to the broker station, the capability activation request message comprising a requested client station with which the first client station requests to communicate on the peer-to-peer basis and at least one requested wireless networking protocol via which the first client station requests to communicate with the requested client station;
receiving a capability activation response message from the broker station; and
initiating communication with the requested client station based on receiving the capability activation response message.

12. The method of claim 8, wherein the networking capability message comprising identifiers and wireless network capabilities of a plurality of other client stations.

13. The method of claim 8, further comprising receiving a broadcasted networking service announcement message from the broker station, the networking service announcement message comprising identifiers and wireless network capabilities of a plurality of other client stations.

14. An apparatus comprising means for performing the functions of any one of claims 1 to 13.

15. A computer program product for facilitating device-to-device communication between mobile stations, the computer program product including executable code that, when executed, is configured to cause execution of the functions of any of claims 1 to 13.

## Patentansprüche

1. Verfahren, umfassend:
Empfangen, durch eine Maklerstation in einem drahtlosen Netzwerk, einer Makleraktivierung-Anforderungsnachricht von einer ersten Client-Station, wobei die Makleraktivierung-Anforderungsnachricht Fähigkeiten für drahtlose Netzanbindung der ersten Client-Station umfasst;
Senden einer Netzanbindungsfähigkeit-Nachricht an mindestens eine andere Client-Station, wobei die Netzanbindungsfähigkeit-Nachricht Identifizierer und Drahtlosnetzwerk-Fähigkeiten der ersten Client-Station umfasst, wobei die Netzanbindungsfähigkeit-Nachricht zumindest teilweise auf der Makleraktivierung-Anforderungsnachricht basiert.

2. Verfahren nach Anspruch 1, wobei die Fähigkeiten für drahtlose Netzanbindung Informationen umfassen, deren Netzanbindungsprotokolle die erste Client-Station zu unterstützen imstande ist.

3. Verfahren nach Anspruch 1, ferner umfassend:
Empfangen, durch die Maklerstation, einer zweiten Makleraktivierung-Anforderungsnachricht von einer zweiten Client-Station;
wobei die Netzanbindungsfähigkeit-Nachricht Identifizierer und Drahtlosnetzwerk-Fähigkeiten der ersten Client-Station und der zweiten Client-Station umfasst, wobei die Netzanbindungsfähigkeit-Nachricht zumindest teilweise auf der Makleraktivierung-Anforderungsnachricht und der zweiten Makleraktivierung-Anforderungsnachricht basiert.

4. Verfahren nach Anspruch 1, wobei die Fähigkeiten für drahtlose Netzanbindung mindestens eines von Operieren als ein Zugangspunkt in einem Infrastrukturnetzwerk, Operieren als ein Nichtzugangspunkt in einem Infrastrukturnetzwerk, Operieren als ein Zugangspunkt in einem Partner-zu-Partner-Netzwerk, Operieren als eine Nichtzugangspunkt-Station in einem Partner-zu-Partner-Netzwerk, Operieren in einem drahtlosen Ad-hoc-Netzwerk, Operieren als ein Maschenpunkt in einem drahtlosen Netzwerk und Operieren als eine Station in einer getunnelten Direktverbindungseinrichtung umfassen.

5. Verfahren nach Anspruch 1, wobei Senden der Netzanbindungsfähigkeit-Nachricht mindestens eines von Senden der Netzanbindungsfähigkeit-Nachricht an eine Vielzahl von anderen Client-Stationen und Rundsenden einer Netzanbindungsdienst-Ankündigungsnachricht umfasst.

6. Verfahren nach Anspruch 1, ferner umfassend:
Empfangen einer Fähigkeitsaktivierung-Anforderungsnachricht von einer anfordernden Client-Station, wobei die Fähigkeitsaktivierung-Anforderungsnachricht eine angeforderte Client-Station, mit der die anfordernde Client-Station anfordert, auf der Partner-zu-Partner-Basis zu kommunizieren, und mindestens ein angefordertes Protokoll für drahtlose Netzanbindung, über das die anfordernde Client-Station anfordert, mit der angeforderten Client-Station zu kommunizieren, umfasst;
Weiterleiten der Fähigkeitsaktivierung-Anforderungsnachricht an die angeforderte Client-Station;
Empfangen einer Fähigkeitsaktivierung-Antwortnachricht von der angeforderten Client-Station; und
Weiterleiten der Fähigkeitsaktivierung-Antwortnachricht an die anfordernde Client-Station.

7. Verfahren nach Anspruch 1, wobei die Netzanbindungsfähigkeit-Nachricht in mindestens einem eines Bakenrahmens und eines Sonden-Antwortrahmens enthalten ist.

8. Verfahren, umfassend:
Senden, durch eine erste Client-Station in einem drahtlosen Netzwerk, einer ersten Makleraktivierung-Anforderungsnachricht an eine Maklerstation, wobei die Makleraktivierung-Anforderungsnachricht Fähigkeiten für drahtlose Netzanbindung der ersten Client-Station umfasst;
Empfangen einer Netzanbindungsfähigkeit-Nachricht von der Maklerstation, wobei die Netzanbindungsfähigkeit-Nachricht Identifizierer und Drahtlosnetzwerk-Fähigkeiten mindestens einer anderen Client-Station umfasst; und
Einleiten von Partner-zu-Partner-Kommunikation mit der mindestens einen anderen Client-Station.

9. Verfahren nach Anspruch 8, wobei die Fähigkeiten für drahtlose Netzanbindung der ersten Client-Station Informationen umfassen, deren Netzanbindungsprotokolle die erste Client-Station zu unterstützen imstande ist, und wobei die Fähigkeiten für drahtlose Netzanbindung der mindestens einen anderen Client-Station Informationen umfassen, deren Netzanbindungsprotokolle die mindestens eine andere Client-Station zu unterstützen imstande ist.

10. Verfahren nach Anspruch 8, wobei die Fähigkeiten für drahtlose Netzanbindung mindestens eines von Operieren als ein Zugangspunkt in einem Infrastrukturnetzwerk, Operieren als ein Nichtzugangspunkt in einem Infrastrukturnetzwerk, Operieren als ein Zugangspunkt in einem Partner-zu-Partner-Netzwerk, Operieren als eine Nichtzugangspunkt-Station in einem Partner-zu-Partner-Netzwerk, Operieren in einem drahtlosen Ad-hoc-Netzwerk, Operieren als ein Maschenpunkt in einem drahtlosen Netzwerk und Operieren als eine Station in einer getunnelten Direktverbindungseinrichtung umfassen.

11. Verfahren nach Anspruch 8, ferner umfassend Senden einer Fähigkeitsaktivierung-Anforderungsnachricht an die Maklerstation, wobei die Fähigkeitsaktivierung-Anforderungsnachricht eine angeforderte Client-Station, mit der die erste Client-Station anfordert, auf der Partner-zu-Partner-Basis zu kommunizieren, und mindestens ein angefordertes Protokoll für drahtlose Netzanbindung, über das die erste Client-Station anfordert, mit der angeforderten Client-Station zu kommunizieren, umfasst;
Empfangen einer Fähigkeitsaktivierung-Antwortnachricht von der Maklerstation; und
Einleiten von Kommunikation mit der angeforderten Client-Station basierend auf Empfangen der Fähigkeitsaktivierung-Antwortnachricht.

12. Verfahren nach Anspruch 8, wobei die Netzanbindungsfähigkeit-Nachricht Identifizierer und Drahtlosnetzwerk-Fähigkeiten einer Vielzahl von anderen Client-Stationen umfasst.

13. Verfahren nach Anspruch 8, ferner umfassend Empfangen einer rundgesendeten Netzanbindungsdienst-Ankündigungsnachricht von der Maklerstation, wobei die Netzanbindungsdienst-Ankündigungsnachricht Identifizierer und Drahtlosnetzwerk-Fähigkeiten einer Vielzahl von anderen Client-Stationen umfasst.

14. Gerät, umfassend Mittel zum Durchführen der Funktionen eines der Ansprüche 1 bis 13.

15. Computerprogrammprodukt zum Erleichtern von Vorrichtung-zu-Vorrichtung-Kommunikation zwischen Mobilstationen, wobei das Computerprogrammprodukt ausführbaren Code enthält, der, wenn er ausgeführt wird, konfiguriert ist, um Ausführung der Funktionen eines der Ansprüche 1 bis 13 zu bewirken.

## Revendications

1. Procédé comprenant les étapes suivantes :
recevoir, par une station gestionnaire de flux dans un réseau sans fil, un message de requête d'activation de gestionnaire de flux à partir d'une première station client, le message de requête d'activation de gestionnaire de flux comportant les fonctions de mise en réseau sans fil de la première station client ;
envoyer un message de fonction de mise en réseau à au moins une autre station client, le message de fonction de mise en réseau comportant l'identifiant et les fonctions de mise en réseau sans fil de la première station client, le message de fonction de mise en réseau étant basé en partie au moins sur le message de requête d'activation de gestionnaire de flux.

2. Procédé selon la revendication 1, dans lequel les fonctions de mise en réseau sans fil comprennent des informations concernant les protocoles réseau que la première station client peut prendre en charge.

3. Procédé selon la revendication 1, comprenant en outre les étapes suivantes :
recevoir, par la station gestionnaire de flux, un deuxième message de requête d'activation de gestionnaire de flux à partir d'une deuxième station client ;
le message de fonction de mise en réseau comportant l'identifiant et les fonctions de mise en réseau sans fil de la première station client et de la deuxième station client, le message de fonction de mise en réseau étant basé au moins en partie sur le message de requête d'activation de gestionnaire de flux et sur le deuxième message de requête d'activation de gestionnaire de flux.

4. Procédé selon la revendication 1, dans lequel les fonctions de mise en réseau sans fil comprennent au moins un élément parmi opérer comme un point d'accès dans un réseau d'infrastructure, opérer comme un point de non-accès dans un réseau d'infrastructure, opérer comme un point d'accès dans un réseau de poste à poste, opérer comme une station de point de non-accès dans un réseau de poste à poste, opérer dans un réseau sans fil ad hoc, opérer comme un point de maillage dans un réseau sans fil, et opérer comme une station dans une configuration de liaison directe tunnelisée.

5. Procédé selon la revendication 1, dans lequel l'étape consistant à envoyer le message de fonction de mise en réseau comprend au moins un élément parmi envoyer le message de fonction de mise en réseau à une pluralité d'autres stations client et diffuser un message d'annonce de service de mise en réseau.

6. Procédé selon la revendication 1, comprenant en outre les étapes suivantes :
recevoir un message de requête d'activation de fonction à partir d'une station client interrogatrice, le message de requête d'activation de fonction comportant une station client interrogée avec laquelle la station client interrogatrice veut communiquer sur la base poste à poste et au moins un protocole réseau sans fil demandé par l'intermédiaire duquel la station client interrogatrice veut communiquer avec la station client interrogée ;
transmettre le message de requête d'activation de fonction à la station client interrogée ;
recevoir un message de réponse d'activation de fonction à partir de la station client interrogée ; et
transmettre le message de réponse d'activation de fonction à la station client interrogatrice.

7. Procédé selon la revendication 1, dans lequel le message de fonction de mise en réseau est inclus dans au moins un élément parmi une trame de balise et une trame de réponse de sonde.

8. Procédé comprenant les étapes suivantes :
envoyer, par une première station client dans un réseau sans fil, un premier message de requête d'activation de gestionnaire de flux à une station gestionnaire de flux, le message de requête d'activation de gestionnaire de flux comportant les fonctions de mise en réseau sans fil de la première station client ;
recevoir un message de fonction de mise en réseau à partir de la station gestionnaire de flux, le message de fonction de mise en réseau comportant l'identifiant et les fonctions de mise en réseau sans fil d' au moins une autre station client ; et
initier une communication de poste à poste avec ladite autre station client.

9. Procédé selon la revendication 8, dans lequel les fonctions de mise en réseau sans fil de la première station client comprennent des informations concernant les protocoles réseau que la première station client peut prendre en charge, les fonctions de mise en réseau sans fil de ladite autre station client comportant des informations concernant les protocoles réseau que ladite autre station client peut prendre en charge.

10. Procédé selon la revendication 8, dans lequel les fonctions de mise en réseau sans fil comprennent au moins un élément parmi opérer comme un point d'accès dans un réseau d'infrastructure, opérer comme un point de non-accès dans un réseau d'infrastructure, opérer comme un point d'accès dans un réseau de poste à poste, opérer comme une station de point de non-accès dans un réseau de poste à poste, opérer dans un réseau sans fil ad hoc, opérer comme un point de maillage dans un réseau sans fil, et opérer comme une station dans une configuration de liaison directe tunnelisée.

11. Procédé selon la revendication 8, comprenant en outre les étapes suivantes :
envoyer un message de requête d'activation de fonction à la station gestionnaire de flux, le message de requête d'activation de fonction comportant une station client interrogée avec laquelle la première station client veut communiquer sur la base poste à poste et au moins un protocole de réseau sans fil demandé par l'intermédiaire duquel la première station client veut communiquer avec la station client interrogée ;
recevoir un message de réponse d'activation de fonction à partir de la station gestionnaire de flux ; et
initier une communication avec la station client interrogée à partir de la réception du message de réponse d'activation de fonction.

12. Procédé selon la revendication 8, dans lequel le message de fonction de mise en réseau comprend les identifiants et les fonctions de mise en réseau sans fil d'une pluralité d'autres stations client.

13. Procédé selon la revendication 8, comprenant en outre l'étape consistant à recevoir un message d'annonce de service de mise en réseau diffusé à partir de la station gestionnaire de flux, le message d'annonce de service de mise en réseau comportant les identifiants et les fonctions de mise en réseau sans fil d'une pluralité d'autres stations client.

14. Appareil comprenant des moyens permettant d'exécuter les fonctions de l'une quelconque des revendications 1 à 13.

15. Produit programme d'ordinateur permettant de faciliter une communication de dispositif à dispositif entre des stations mobiles, le produit programme d'ordinateur comprenant un code exécutable, qui, lorsqu'il est exécuté, est configuré pour provoquer la mise en oeuvre des fonctions de 1"une quelconque des revendications 1 à 13.
